# EUROPÄISCHE PATENTSCHRIFT

(11) **EP 2 942 137 B1**
(45) Veröffentlichungstag und Bekanntmachung des Hinweises auf die Patenterteilung: **20.04.2022**
(21) Anmeldenummer: 15165480.3
(22) Anmeldetag: 28.04.2015
(51) Int. Cl.: B23D 47/04, B23D 59/00

(54) **SÄGEMASCHINE ZUM SÄGEN VON METALLISCHEN WERKSTÜCKEN**
SAWING MACHINE FOR SAWING METALLIC WORKPIECES
SCIE MÉCANIQUE DESTINÉE À SCIER DES PIÈCES MÉTALLIQUES

(30) Priorität: 07.05.2014 DE 102014208535
(43) Veröffentlichungstag der Anmeldung: 11.11.2015
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Sabel, André, 67410 Drusenheim (FR)
(74) Vertreter: Lemcke, Brommer & Partner Patentanwälte Partnerschaft mbB

(56) Entgegenhaltungen:
- EP-A1- 2 253 403
- DE-A1- 3 630 908
- US-A- 2 932 229
- US-A- 3 810 404
- US-A- 4 342 240
- US-A1- 2003 000 358
- US-A1- 2004 117 058
- US-A1- 2007 144 320
- US-A1- 2012 297 949

## Beschreibung

Die Erfindung betrifft eine Sägemaschine zum Sägen von metallischen Werkstücken nach dem Oberbegriff des Anspruchs 1. Eine solche Sägemaschine ist in DE3630908 und JP05309518A offenbart und J Z umfasst ein Maschinengestell und ein am Maschinengestell angebrachtes Sägenoberteil, das ein Sägewerkzeug trägt, welches zur Erzeugung einer spanabhebenden Sägebewegung angetrieben ist. Das Sägenoberteil ist relativ zum Sägetisch bewegbar, um eine in einer Schnittebene verlaufende Sägevorschubbewegung des Sägewerkzeugs auszuführen. Das Maschinengestell umfasst einen Sägetisch sowie vor- und zurückbewegbare Spannbacken zum Positionieren von Werkstücken auf dem Sägetisch. Die Sägemaschine ist schließlich auch mit einer Maschinensteuerung zur Steuerung der Bewegungsabläufe versehen. Sägemaschinen der vorliegenden Art werden in der Regel als Bandsägemaschinen oder Kreissägemaschinen realisiert. Das Sägewerkzeug kann dementsprechend ein Sägeband oder ein Sägeblatt sein.

Metallische Werkstücke, die mit Sägemaschinen der vorliegenden Art gesägt werden, sind in der Regel so schwer, dass sie nicht händisch auf den Sägetisch gelegt werden können. Sie werden vielmehr dem Sägetisch mit Fördermitteln zugeführt. Für den eigentlichen Sägevorgang werden die Werkstücke in die Spannbacken am Sägetisch eingespannt und dann das Sägenoberteil abgesenkt, um den erwünschten Sägeschnitt durchzuführen.

Die Spannbacken einer Sägemaschine der vorliegenden Art sind vor- und zurückbewegbar, um die Werkstücke für den Sägevorgang zu positionieren. Zu Beginn eines Sägevorgangs führen die Spannbacken eine Vorschubbewegung um ein Längenmaß aus, das dem Längenmaß des abzusägenden Werkstückteils entspricht. Dementsprechend muss das Werkstück zum Beginn eines Sägevorgangs in einer Nullposition positioniert sein, in der eine vordere Stirnseite des Werkstücks in der Schnittebene liegt. Denn nur dann führt die Vorschubbewegung der Spannbacken dazu, dass die Schnittebene im gewünschten Abstand von der Stirnseite des Werkstücks verläuft, um einen Teil des Werkstücks mit der gewünschten Dicke abzusägen. Die Maschinensteuerung einer Sägemaschine der vorliegenden Art steuert demzufolge die Spannbacken so an, dass sie das Werkstück in der Nullposition einspannen, in der die vordere Stirnseite des Werkstücks in der Schnittebene liegt und das eingespannte Werkstück von der Nullposition mit einer Vorschubbewegung in eine Schneidposition bringen, in der diejenige Stelle des Werkstücks in der Schnittebene liegt, an der das Werkstück abgesägt werden soll.

Die Schwierigkeit besteht nun darin, das Werkstück beim Zuführen auf den Sägetisch in der Sägemaschine möglichst genau und dennoch rasch in die Nullposition zu bringen, um den Sägevorgang beginnen zu können.

Eine bekannte Möglichkeit, dieses Problem zu lösen, besteht darin, einen Anschlag in der Schnittebene zu positionieren, gegen den das Werkstück beim Zuführen anschlägt, so dass seine Stirnseite im Ergebnis in der Schnittebene zu liegen kommt. Nachteilig ist hierbei, dass der Anschlag für den Sägevorgang entfernt werden muss, da ansonsten keine Vorschubbewegung in die Schneidposition möglich wäre. Gleichzeitig muss der Anschlag sehr widerstandsfähig ausgebildet sein, um dem Impuls des anschlagenden Werkstücks Stand halten zu können. Schließlich muss das Werkstück vor dem Anschlag verlangsamt werden, um nicht aufgrund eines elastischen Stoßes am Anschlag zurückzuprallen.

Eine andere bekannte Lösung dieses Problems besteht darin, die Stirnseite des Werkstücks mittels Sensoren auf ihrem Weg zur Schnittebene zu detektieren und an die Maschinensteuerung zu melden, so dass diese das Werkstück rechtzeitig vor Erreichen der Schnittebene abbremsen kann und das Werkstück schließlich in der Nullposition stehen bleibt. Neben dem Aufwand, den eine solche Sensorik bedingt, hat es sich herausgestellt, dass entsprechende Sensoren in der rauen Umgebung einer Sägemaschine der vorliegenden Art sehr störanfällig sind und des Öfteren ersetzt werden müssen. Diese Lösung ist daher aufgrund der Zusatzkosten sowie aufgrund einer mangelnden Zuverlässigkeit nicht optimal.

Eine dritte bekannte Lösung des gegebenen Problems besteht darin, lediglich einen Sensor, und zwar eine Lichtschranke, in der Schnittebene vorzusehen und das Werkstück auf Sicht in die Sägemaschine und auf den Sägetisch einzufördern, wobei die Stirnseite des Werkstücks über die Schnittebene und damit die Nullposition hinausgefördert wird. Sodann wird das Werkstück in die Spannbacken eingespannt und die Spannbacken zurückbewegt, bis die in der Schnittebene angeordnete Lichtschranke vom Werkstück freigegeben wird. In diesem Moment wird die Bewegung gestoppt, so dass die Nullposition des Werkstücks erreicht ist, denn im Moment des Freigebens der Lichtschranke befindet sich die Stirnseite des Werkstücks in der Schnittebene.

Eine in der Schnittebene angeordnete Lichtschranke ist sehr viel weniger störanfällig als eine aufwändige Sensorik zur Steuerung der Förderbewegung beim Einfördern des Werkstücks in die Sägemaschine, jedoch sind auch die Bestandteile der Lichtschranke, die notwendigerweise innerhalb der Sägemaschine angeordnet sein müssen, den rauen Umgebungsbedingungen beim Betrieb der Sägemaschine ausgesetzt und sind dementsprechend ebenfalls nicht immer zuverlässig störungsfrei zu betreiben.

Der vorliegenden Erfindung liegt daher die Aufgabe zugrunde, eine Sägemaschine der eingangs genannten Art vorzuschlagen, bei der die Nullposition des Werkstücks auf dem Sägetisch ohne die bekannten Sensoren und ohne einen Anschlag eingestellt werden kann.

Gelöst ist diese Aufgabe durch eine Sägemaschine mit den Merkmalen des Anspruchs 1. Bevorzugte Ausgestaltungen der erfindungsgemäßen Sägemaschine sind in den Ansprüchen 2 bis 5 niedergelegt.

Die Maschinensteuerung einer Sägemaschine der eingangs genannten Art ist erfindungsgemäß also so ausgestaltet, dass sie ein auf den Sägetisch gelegtes Werkstück in die Spannbacken einspannt und dann auf die Eingabe eines Offsetwerts wartet, welcher der Entfernung der vorderen Stirnseite des Werkstücks von der Nullposition entspricht. Erst danach wird das Werkstück durch Vorschieben oder Zurückziehen der Spannbacken unter Berücksichtigung des Offsetwerts in die Nullposition gebracht und erforderlichenfalls neu eingespannt. Dann kann mit einer Vorschubbewegung in die Schneidposition der Sägevorgang beginnen.

Die Eingabe eines Offsetwerts in die Maschinensteuerung kann im einfachsten Fall durch die Bedienperson der Sägemaschine erfolgen. Diese fährt das Werkstück auf Sicht in die Sägemaschine ein, und zwar in eine Position auf dem Sägetisch, die in etwa der Nullposition entspricht. Danach wird das Werkstück in die Spannbacken eingespannt. Die Bedienperson kann dann beispielsweise mittels eines Zollstocks den Abstand zwischen der Stirnseite des Werkstücks und der Schnittebene bestimmen und händisch als Offsetwert in die Maschinensteuerung eingeben, so dass diese dann das Werkstück in die Nullposition verfahren kann.

Vorzugsweise ist der Sägetisch und/oder ist eine der Spannbacken oder ein seitlicher Anschlag für das Werkstück mit einer Millimeter- und/oder Inch-Skala versehen, deren Nullpunkt in der Schnittebene liegt. Die Bedienperson kann dann ohne einen Zollstock in die Hand nehmen zu müssen und parallaxenfrei den Offsetwert ablesen und in die Maschinensteuerung eingeben. Mit einer solchen Skala werden Ablesefehler und Handhabungsfehler, die bei der Benutzung eines Zollstocks nicht selten sind, vermieden.

Schließlich kann im Rahmen der vorliegenden Erfindung auch vorgesehen sein, dass der Sägetisch und/oder eine der Spannbacken oder ein seitlicher Anschlag für das Werkstück mit einer automatisch ablesbaren Skala versehen ist und der automatisch abgelesene Skalenwert als Offsetwert selbsttätig an die Maschinensteuerung gemeldet wird, insbesondere über eine Funkstrecke. Diese automatische Ablesung kann mittels eines Lasers vorgenommen werden, oder beispielsweise induktiv erfolgen und dergleichen mehr.

Bevorzugt wird im Rahmen der vorliegenden Erfindung das Werkstück mit seiner Stirnseite über die Nullposition hinaus bewegt, wenn es in die Sägemaschine eingefördert wird, so dass der Offsetwert ein negativer Wert ist, der zum Zurückziehen des Werkstücks in die Nullposition führt. Im Rahmen der vorliegenden Erfindung ist es jedoch genauso gut möglich, das Werkstück bis kurz vor Erreichen der Nullposition einzufördern und einen positiven Offsetwert in die Maschinensteuerung einzugeben, so dass diese das eingespannte Werkstück mit einer Vorschubbewegung in die Nullposition bringt.

Ein Ausführungsbeispiel für eine erfindungsgemäß ausgestaltete Sägemaschine wird im Folgenden anhand der beigefügten Zeichnung näher beschrieben und erläutert.

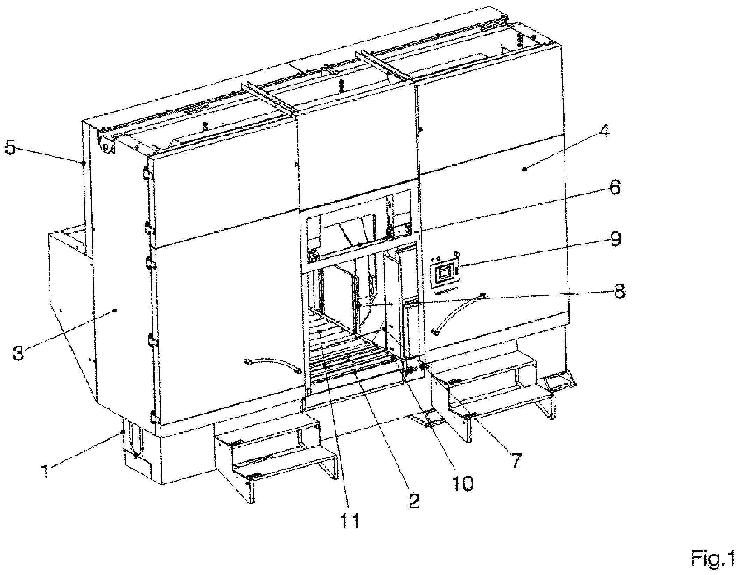

Die einzige Figur 1 zeigt in perspektivischer Ansicht eine Sägemaschine, die gemäß der vorliegenden Erfindung ausgestaltet ist. Diese Sägemaschine umfasst ein Maschinengestell 1 mit einem Sägetisch 2 und Seitenverkleidungen 3, Frontverkleidungen 4 und Rückseitenverkleidungen 5, die aus Sicherheitsgründen den Zugang zu bewegten Teilen der Sägemaschine verhindern. Hinter diesen Verkleidungen ist ein Sägenoberteil angeordnet, das zwei (nicht sichtbare) Laufräder aufweist, um die ein Sägeband als Sägewerkzeug 6 umläuft. In der vorliegenden Darstellung befindet sich das Sägenoberteil mit dem Sägewerkzeug 6 in der obersten möglichen Position; durch Absenken des Sägenoberteils und damit des Sägewerkzeugs 6 wird dieses in einer Schnittebene 7 zum Sägetisch 2 hin bewegt, so dass ein auf dem Sägetisch 2 aufliegendes Werkstück (nicht dargestellt) in der Schnittebene 7 abgesägt wird. Die Schnittebene 7 markiert gleichzeitig die Nullposition des Werkstücks, da in der Nullposition eine Stirnseite des Werkstücks in der Schnittebene 7 liegt.

Im Bereich des Sägetischs 2 sind hinter der Schnittebene 7 vor und zurück bewegbare Spannbacken 8 angebracht, um das Werkstück positionieren zu können. Die Spannbacken 8, wie auch alle anderen bewegten Teile der Sägemaschine, werden von einer Maschinensteuerung gesteuert. Die Maschinensteuerung kann über ein Bedienfeld 9 bedient werden.

Im Bereich des Sägetischs 2 ist eine Längenskala 10 eingraviert; im vorliegenden Fall nur vor der Schnittebene 7.

Um einen Sägevorgang an einem neuen Werkstück beginnen zu können, muss eine Bedienperson über das Bedienfeld 9 ein Werkstück mittels einer Rollenbahn 11 in die Sägemaschine einfahren und so auf Sicht auf dem Sägetisch anhalten, dass die Stirnseite des Werkstücks vor der Schnittebene 7 zu liegen kommt, und zwar im Bereich der Längenskala 10. Danach wird das Werkstück mit den Spannbacken 8 eingespannt.

An der Längenskala 10 kann ein Offsetwert abgelesen werden, den die Bedienperson über das Bedienfeld 9 in die Maschinensteuerung eingibt. Die Maschinensteuerung zieht dann die Spannbacken 8 um den Offsetwert zurück, so dass die Stirnseite des Werkstücks in der Schnittebene 7 liegt und die Nullposition des Werkstücks erreicht ist. Die Maschinensteuerung spannt dann das Werkstück neu ein und bringt das Werkstück mit einer Vorschubbewegung in die von der Bedienperson gewählte Schneidposition, so dass durch eine Absenkbewegung des Sägewerkzeugs 6 ein Teil des Werkstücks mit dem gewünschten Längenmaß abgesägt wird.

## Patentansprüche

1. Sägemaschine zum Sägen von metallischen Werkstücken, mit einem Maschinengestell (1), das einen Sägetisch (2) sowie vor und zurück bewegbare Spannbacken (8) zum Positionieren von Werkstücken auf dem Sägetisch (2) umfasst, mit einem am Maschinengestell (1) angebrachten Sägenoberteil, das zur Erzeugung einer in einer Schnittebene (7) verlaufenden Sägevorschubbewegung relativ zum Sägetisch (2) bewegbar ist und ein Sägewerkzeug (6) trägt, welches zur Erzeugung einer spanabhebenden Sägebewegung angetrieben ist, und mit einer Maschinensteuerung zur Steuerung der Bewegungsabläufe, wobei die Maschinensteuerung die Spannbacken (8) so ansteuert, dass sie das Werkstück in einer Nullposition einspannen, in der eine vordere Stirnseite des Werkstücks in der Schnittebene (7) liegt, und das eingespannte Werkstück von der Nullposition mit einer Vorschubbewegung in eine Schneidposition bringen, in der diejenige Stelle des Werkstücks in der Schnittebene (7) liegt, an der das Werkstück abgesägt werden soll,
**dadurch gekennzeichnet,**
**dass** die Maschinensteuerung so ausgestaltet ist, dass sie ein auf den Sägetisch (2) gelegtes Werkstück in die Spannbacken (8) einspannt und dann auf die manuelle Eingabe eines Offsetwerts wartet, welcher der Entfernung der vorderen Stirnseite des Werkstücks von der Nullposition entspricht, danach das Werkstück durch Vorschieben oder Zurückziehen der Spannbacken (8) unter Berücksichtigung des Offsetwerts in die Nullposition bringt, neu einspannt und mit einer Vorschubbewegung in die Schneidposition bringt.

2. Sägemaschine nach Anspruch 1,
**dadurch gekennzeichnet,**
**dass** der Sägetisch (2) und/oder die Spannbacken (8) oder eine seitliche Anschlagsfläche am Sägetisch (2) mit einer Längenskala (10) versehen ist.

3. Sägemaschine nach Anspruch 2,
**dadurch gekennzeichnet,**
**dass** die Längenskala (10) eingraviert ist.

4. Sägemaschine nach einem der Ansprüche 2 oder 3,
**dadurch gekennzeichnet,**
**dass** eine Einrichtung zum Ablesen der Position der Stirnseite des Werkstücks an der Längenskala (10) und zum Weiterleiten des abgelesenen Längenwertes an die Maschinensteuerung vorhanden ist.

5. Sägemaschine nach mindestens einem der Ansprüche 1 bis 4,
**dadurch gekennzeichnet,**
**dass** der Sägetisch (2) und/oder die Spannbacken (8) oder eine seitliche Anschlagsfläche am Sägetisch (2) mit einer Einrichtung zur automatischen Erkennung der Stirnfläche des Werkstücks und zum Weiterleiten des Abstands zwischen der detektierten Position der Stirnseite des Werkstücks und der Schnittebene (7) an die Maschinensteuerung versehen sind.

## Claims

1. Sawing machine for sawing metallic workpieces, comprising a machine frame (1) that includes a sawing bench (2) as well as clamping jaws (8) that are moveable back and forth for positioning workpieces on the sawing bench (2), an upper saw part attached to the machine frame (1) that is moveable relative to the sawing bench (2) for producing a saw feeding movement extending in a cutting plane (7) and carries a sawing tool (6), which is driven to produce a material-removing sawing movement, and a machine controller for controlling the movement sequences, wherein the machine controller controls the clamping jaws (8) in such a way that they clamp the workpiece in a zero position, in which a face of the workpiece lies in the cutting plane (7), and with a feeding movement bring the clamped workpiece from the zero position into a cutting position, in which that point of the workpiece at which the workpiece is to be sawn off lies in the cutting plane (7),
**characterised in that**
the machine controller is configured in such a way that it clamps a workpiece laid on the sawing bench (2) in the clamping jaws (8) and then awaits the manual input of an offset value, which corresponds to the distance of the face of the workpiece from the zero position, then brings the workpiece into the zero position by advancing or retracting the clamping jaws (8) taking into account the offset value, re-clamps it and brings it into the cutting position by a feeding movement.

2. Sawing machine according to claim 1,
**characterised in that**
the sawing bench (2) and/or the clamping jaws (8) or a lateral stop face on the sawing bench (2) is provided with a length scale (10).

3. Sawing machine according to claim 2,
**characterised in that**
the length scale (10) is engraved.

4. Sawing machine according to any one of claims 2 or 3,
**characterised in that**
a device is present for reading the position of the face of the workpiece on the length scale (10) and for transmitting the read length value to the machine controller.

5. Sawing machine according to at least one of claims 1 to 4,
**characterised in that**
the sawing bench (2) and/or the clamping jaws (8) or a lateral stop face on the sawing bench (2) are provided with a device for automatic detection of the face of the workpiece and for transmitting the distance between the detected position of the face of the workpiece and the cutting plane (7) to the machine controller.

## Revendications

1. Scie pour scier des pièces à usiner métalliques, avec un bâti de machine (1), qui comporte une table de scie (2) ainsi que des mâchoires de serrage (8) mobiles en avant et en arrière pour le positionnement de pièces à usiner sur la table de scie (2), avec une partie supérieure de scie montée sur le bâti de machine (1), qui est mobile pour la génération d'un mouvement d'avance de scie s'étendant dans un plan de coupe (7) par rapport à la table de scie (2) et porte un outil de scie (6) qui est entraîné pour la génération d'un mouvement de scie par enlèvement de copeaux, et avec une commande de machine pour la commande des séquences de mouvement, dans laquelle la commande de machine commande les mâchoires de serrage (8) de sorte qu'elles serrent la pièce à usiner dans une position nulle, dans laquelle un côté frontal avant de la pièce à usiner se trouve dans le plan de coupe (7), et amènent la pièce à usiner serrée de la position nulle avec un mouvement d'avance dans une position de coupe, dans laquelle le point de la pièce à usiner se trouve dans le plan de coupe (7), au niveau duquel la pièce à usiner doit être sciée,
**caractérisée en ce**
**que** la commande de machine est configurée de sorte qu'elle serre une pièce à usiner placée sur la table de scie (2) dans les mâchoires de serrage (8) et attend ensuite la saisie manuelle d'une valeur de déport qui correspond à l'éloignement du côté frontal avant de la pièce à usiner de la position nulle, puis amène la pièce à usiner par avance ou retrait des mâchoires de serrage (8) en tenant compte de la valeur de déport dans la position nulle, la serre de nouveau et l'amène avec un mouvement d'avance dans la position de coupe.

2. Scie selon la revendication 1,
**caractérisée en ce**
**que** la table de scie (2) et/ou les mâchoires de serrage (8) ou une surface de butée latérale est pourvue au niveau de la table de scie (2) d'une échelle de longueur (10).

3. Scie selon la revendication 2,
**caractérisée en ce**
**que** l'échelle de longueur (10) est gravée.

4. Scie selon l'une quelconque des revendications 2 ou 3,
**caractérisée en ce**
**qu'**un appareil de lecture de la position du côté frontal de la pièce à usiner est présent au niveau de l'échelle de longueur (10) et de transmission de la valeur de longueur lue au niveau de la commande de machine.

5. Scie selon au moins l'une quelconque des revendications 1 à 4,
**caractérisée en ce**
**que** la table de scie (2) et/ou les mâchoires de serrage (8) ou une surface de butée latérale au niveau de la table de scie (2) sont pourvues d'un appareil pour la reconnaissance automatique de la surface frontale de la pièce à usiner et pour la transmission de la distance entre la position détectée du côté frontal de la pièce à usiner et le plan de coupe (7) au niveau de la commande de machine.
